# EUROPÄISCHE PATENTSCHRIFT

(11) **EP 1 263 275 B1**
(45) Veröffentlichungstag und Bekanntmachung des Hinweises auf die Patenterteilung: **16.11.2005**
(21) Anmeldenummer: 01907467.3
(22) Anmeldetag: 19.01.2001
(51) Int. Cl.: A01C 5/06

(54) **FURCHENÖFFNER**
FURROW OPENER
DISPOSITIF D'OUVERTURE DE SILLONS

(30) Priorität: 28.01.2000 US 493443
(43) Veröffentlichungstag der Anmeldung: 11.12.2002
(73) Patentinhaber: DEERE & COMPANY, Moline, Illinois 61265-8098 (US)
(72) Erfinder: WENDLING, Ignatz, 66482 Zweibrücken (DE); FERGUSON, Larry, Patrick, Bettendorf, IA 52722 (US)
(74) Vertreter: Holst, Sönke
(86) Internationale Anmeldenummer: PCT/EP2001/000587
(87) Internationale Veröffentlichungsnummer: WO 2001/054484

(56) Entgegenhaltungen:
- EP-A- 0 117 745
- FR-A- 2 041 925
- US-A- 2 920 587
- US-A- 4 407 207
- US-A- 4 596 200
- US-A- 4 760 806
- US-A- 5 752 454

## Beschreibung

Die Erfindung betrifft einen Furchenöffnerzusammenbau, mit einer Scheibe, die um eine Achse drehbar und eingerichtet ist, eine Furche im Boden zu öffnen, einem ersten, sich im Eingriff mit dem Boden befindlichen Rad und einem zweiten, sich im Eingriff mit dem Boden befindlichen Rad, die zusammenwirken, um die Furche zu schließen, wobei das erste Rad und das zweite Rad unterste Abschnitte aufweisen, die sich der nachlaufenden Kante der Scheibe benachbart im Eingriff mit dem Boden befinden, das erste Rad auf einer ersten Seite der Scheibe und das zweite Rad auf einer zweiten Seite der Scheibe angeordnet ist und die in Vorwärtsrichtung am weitesten vorn angeordneten Teile des ersten Rads in Vorwärtsrichtung hinter der Achse der Scheibe und in Vorwärtsrichtung vor der nachlaufenden Kante der Scheibe angeordnet sind.

Ein gattungsgemäßer Furchenöffnerzusammenbau zum Ablegen von Saat oder Dünger in einer Furche, wie er in der US 4 760 806 A oder FR 2 041 925 A gezeigt ist, umfasst eine abgewinkelte Scheibe mit einem Tiefeneinstellrad nahe der vorlaufenden Seite der Scheibe und einen Säscharzusammenbau einschließlich eines Saatgutrohrs an der nachlaufenden Seite der Scheibe. Das Tiefeneinstellrad erlaubt eine Tiefeneinstellung, reinigt die vorlaufende Seite der Scheibe und begrenzt in der Nähe der Scheibe ein Anheben und Abwerfen von Teilen des Erdbodens. Mehrere Schließ- oder Andrückräder folgen der Scheibe, um Erdboden zu bewegen und die Furche über dem vom Saatgutrohr abgelegten Material zu schließen.

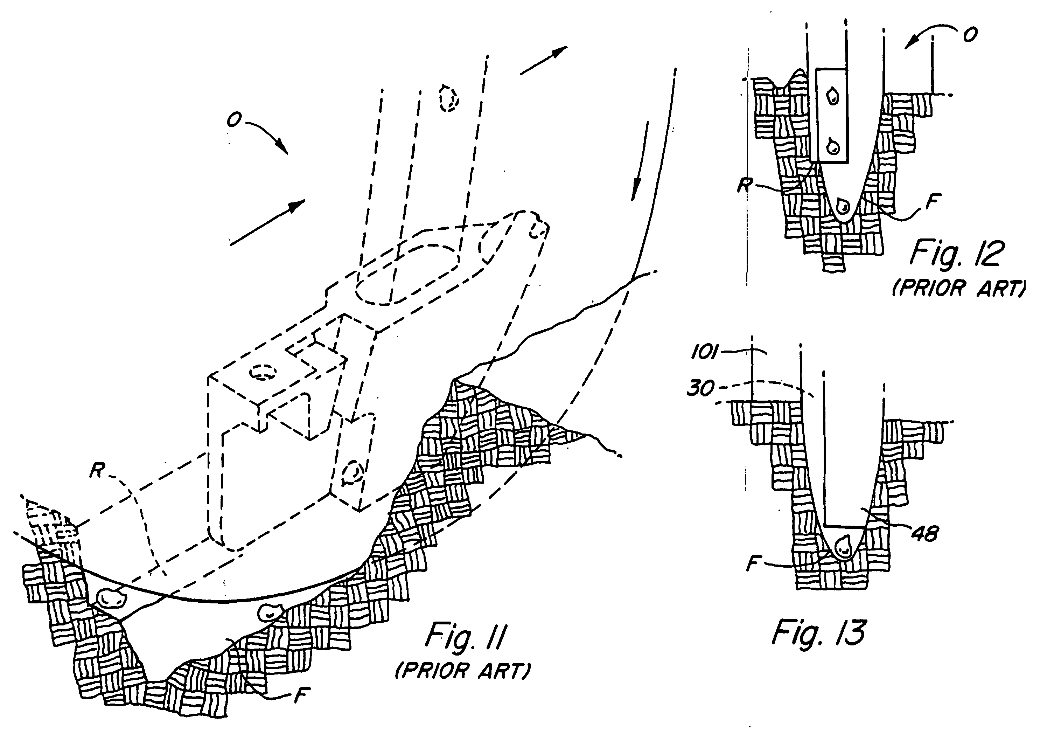

Wenn ein Furchenöffnerzusammenbau Saatgut in einer Furche ablegt, ist ein Ablegen der Saat in einer konstanten Tiefe für ein gleichförmiges Keimen und optimales Pflanzenwachstum wichtig. Häufig haben Furchenöffnerzusammenbauten Schließ- oder Andrückräder, die dem Säschar in einer beträchtlichen Entfernung nachlaufen. Das tatsächliche Schließen der Furche findet nach einiger Zeit statt, nachdem das abgelegte Material den Boden der Furche erreicht hat, und oft hat das Material Zeit, durch die Relativbewegung bedingt vom Boden der Furche hochzuspringen, so dass die Folge ist, dass das Material flacher als beabsichtigt abgelegt wird. Gelegentlich kann Saatgut völlig aus der Furche herausspringen, so dass es an der Oberfläche des Erdbodens liegt und nicht keimt. Der Trend zum Säen und Düngen bei höherer Geschwindigkeit zur Vergrößerung der Produktivität vergrößert das Problem des Herausspringens des Materials und des Aufwerfens von Erdboden. Außerdem kann die Sohle des Säschars bei einigen zur Zeit verfügbaren Furchenöffnerzusammenbauten (siehe O bei den Beispielen des Standes der Technik in Figur 11 und 12) eine leicht vorspringende Kante oder einen Grat (R) an der Seite der Furche (F) formen, insbesondere wenn relativ tief gearbeitet wird, und Saatgut kann am Grat liegen bleiben, anstelle am Boden der Furche. Ein weiteres Problem entsteht, wenn vom unerwünschten Kanten- oder Gratbildungsprozess betroffener Boden auf den Boden der Furche fällt und die Ablage des Saatguts beeinträchtigt.

Verschiedene Saatguthaltestreifen oder Saatgutandrückzusätze, wie sie in der US 5 092 255 A, US 5 673 638 A und US 5 918 557 A beschrieben werden, wurden verfügbar gemacht, um das Hochspringen des Saatguts zu begrenzen oder das Material in der Furche anzudrücken, aber ihre Folge waren zusätzliche Komponenten, Verteuerung und Wartung, und manchmal versagen sie bei einer kompletten Lösung des durch Hochspringen und Gratbildung verursachten Problems. Einige Radstrukturen können die Entfernung von Unrat vermindern und eine Quelle von Blockagen sein, insbesondere auf Feldern mit einem hohen Anteil an Unrat.

Die der Erfindung zugrunde liegende Aufgabe wird darin gesehen, einen verbesserten Furchenöffnerzusammenbau bereitzustellen, der die meisten oder alle der oben erwähnten Probleme löst.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Ein gemäß der vorliegenden Erfindung aufgebauter Furchenöffnerzusammenbau umfasst mindestens eine Scheibe zum Öffnen einer Furche, die drehbar in der Regel an einer Zugstange befestigt und um etwa 5 Grad gegenüber der Vorwärtsrichtung abgewinkelt ist, um eine Schattenfläche hinter der nachlaufenden Kante der Scheibe zu definieren und eine Furche im Boden zu öffnen. Um die Furche unmittelbar, nachdem Material auf dem Boden der Furche abgelegt wurde, zu schließen, ist auf gegenüberliegenden Seiten der Scheibe jeweils ein erstes Rad und ein zweites Rad bereitgestellt, um Boden nach dem Ablegen des Materials nach unten zu drücken. Die in Vorwärtsrichtung am weitesten vorn angeordneten Teile des ersten Rads und des zweiten Rads sind hinter der Achse der Scheibe und vor der nachlaufenden Achse der Scheibe angeordnet, um die Furche unmittelbar hinter der Scheibe schließen zu können. Das erste Rad dient nicht nur zum Schließen der Furche, sondern ist gleichzeitig ein Tiefeneinstellrad, das sich an der nachlaufenden Seite der Scheibe auf dem Erdboden neben der Furche abstützt. Es kann zum Schließen der Furche Bodenmaterial um die nachlaufende Kante der Scheibe drücken, um die Wand der Furche unmittelbar, nachdem Material darin abgelegt ist, zusammenzudrücken, und eine Abstreifwirkung an der Scheibe bereitstellen, um zu verhindern, dass Boden aus der Furchte angehoben wird, wenn die Scheibe aus dem Boden herauskommt, insbesondere bei feuchten, klebrigen Bodenbedingungen.

Die Wände der Furche fallen von oben nach unten zusammen und stellen eine Bodenwelle vor den Rädern bereit. Die von den nahe beabstandeten Rädern bewirkte Bodenbewegung schiebt das Material auf den Grund der Furche und hat eine sehr konstante Materialtiefe zur Folge. Die baldige Bodenbewegung verhindert auch, dass das Material - durch die Vorwärtsbewegung und die Fallgeschwindigkeit bedingt am Boden der Furche reflektiert wird und - wieder hochspringt und hat eine wesentlich bessere Kontrolle der Platzierung des Materials zur Folge als sie bei wenigstens den meisten Öffnerzusammenbauten gegeben ist, die Schließräder haben, die der Öffnerscheibe folgen und daher eine verzögerte Schließwirkung bereitstellen. Die nahe Anbringung des Rads an der nachlaufenden Seite der Scheibe vermindert die Länge des Zusammenbaus, stellt ein besseres Spurfolgeverhalten bereit und vermindert das Gewicht des Radträgerarms, so dass ein nachlaufendes Rad in einstellbarer Weise hauptsächlich durch die Wirkung einer Feder gegen den Boden vorgespannt werden kann, so dass es schneller Bodenkonturen folgen kann. Wenn dehydriertes Ammoniak (NH₃) oder ähnliches Material durch den erfindungsgemäßen Öffnerzusammenbau im Boden abgelegt wird, verschließt die vorteilhafte Schließwirkung die Furche unmittelbar nach dem Einbringen, um den Verlust von Gas zu vermeiden.

Auf diese Weise erhält man einen Furchenöffner, der sich für Sä- und/oder Düngearbeiten eignet, die mit hoher Geschwindigkeit durchgeführt werden. Er ist kompakt und hat ein enges Profil, und in der Furche hochspringendes Material ist nicht zu befürchten.

Die Achse des ersten Rads kann im wesentlichen parallel zur Achse der Scheibe verlaufen, welche in an sich bekannter Weise im Winkel von mindestens etwa 85 Grad zur Vorwärtsrichtung verläuft.

Das erste, als Tiefeneinstellrad dienende Rad kann hinter der Achse der Scheibe an einem Arm-Zusammenbau aufgehängt sein, der eine bequeme Tiefeneinstellung vom vorderen Ende der Zugstange her ermöglicht. Dadurch, dass das Rad gegenüber einer konventionellen Position (s. US 4 760 806 A) nach hinten versetzt wird, kann eine kleinere Scheibe verwendet werden, um tiefer in den Boden einzudringen, während gute Resistenz gegen Anheben von Boden in dem Bereich, in dem die Scheibe den Boden verlässt, gewährleistet ist. Das erste Rad und das zweite, schließende Rad sind vorzugsweise in dieselbe Richtung abgewinkelt, um eine verbesserte Abfuhr von Unrat zwischen den Rädern zu ermöglichen und ein Verstopfen zu vermeiden. Ein über die gesamte Maschine betrachtet verbesserter Fluss des Unrats, insbesondere bei Bedingungen mit viel Unrat, ist ein anderer durch die Anbringung der Räder im gleichen Winkel erreichter Vorteil. Durch eine Verwendung gleich abgewinkelter Räder und einen Versatz der Abstände der Furchenöffnerzusammenbauten wird verhindert, dass Unrat von einem Öffner auf einen benachbarten Öffner trifft.

Vorzugsweise ist der Furchenöffner mit einer Einrichtung zum Einbringen von Material in den Boden (Säschar) versehen. Die Räder schließen die Furche unmittelbar hinter dieser Einrichtung und sind in der Regel innerhalb der (seitlich und/oder in Vorwärtsrichtung betrachteten) Schattenfläche der Scheibe angeordnet, um sie vor Verunreinigungen und Beschädigungen durch aufgeworfene Steine oder dergleichen zu schützen. Die Einrichtung zum Einbringen von Material hält die Furche offen.

Die Einrichtung zum Einbringen von Material in die Furche hält die Furche offen, während ein im wesentlichen gerades Materialzufuhrrohr, welches vertikal und hinter der Achse der Scheibe angeordnet ist, Saatgut oder anderes Material vorzugsweise nahe der Vorderseite der Räder auf dem Boden der Furche ablegt.

Die Einrichtung zum Einbringen von Material in die Furche kann auch als Abstreifer der Scheibe wirken, wenn sie um eine beliebige, vorzugsweise aber im wesentlichen horizontale Achse schwenkbar ist, wobei eine Feder die Einrichtung gegen die Scheibe drückt.

Weiterhin kann die Einrichtung ein Profil, also einen in Vorwärtsrichtung betrachteten Querschnitt haben, das mit dem Profil der Furche übereinstimmt oder darauf eingeschränkt ist. Wenn das Profil der Einrichtung zum Einbringen von Material in die Furche auf das Profil der Furche eingeschränkt wird, ist die Größe zwecks guten Andrücken des Bodens gegen die Wände der Furche und hohen Durchsatzes maximiert, während die Beeinträchtigung des Bodens, die Abnutzung der Einrichtung und die Leistungsanforderungen begrenzt sind.

Die Scheibe kann mit einer Nabe versehen sein, welche von der Einrichtung zur Abschirmung gegen Verunreinigungen um mehr als 180 Grad umschlossen wird.

Vorzugsweise weisen die mit dem Boden im Eingriff befindlichen Räder denselben Abstand von der Einrichtung zum Einbringen von Material in die Furche auf, so dass sie den Boden an gegenüberliegenden Seiten der etwa gleichzeitig in die Furche drücken.

Die Einrichtung zum Einbringen von Material in die Furche kann durch ein Materialzufuhrrohr mit Material versorgt werden, das im oberen Bereich kreisförmig ist und kontinuierlich in einen elliptischen Querschnitt übergeht. Dadurch wird ein hoher Durchsatz und hohe Arbeitsgeschwindigkeit ermöglicht.

In den Zeichnungen ist ein nachfolgend näher beschriebenes Ausführungsbeispiel der Erfindung dargestellt. Es zeigt:
- Fig. 1: eine Seitenansicht eines Furchenöffnerzusammenbaus,
- Fig. 2: eine rückseitige perspektivische Ansicht des Furchenöffnerzusammenbaus der Figur 1, wobei Teile fortgelassen sind,
- Fig. 3: eine vergrößerte perspektivische Ansicht des Scharniers des Säschars und des das Schließrad tragenden Bereichs des Furchenöffnerzusammenbaus der Figur 1,

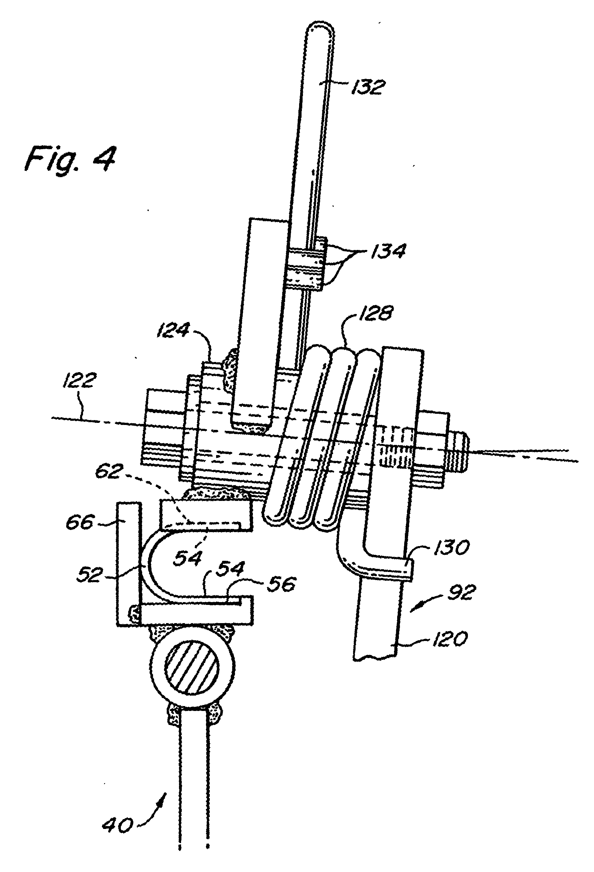

- Fig. 4: eine rückwärtige Ansicht des das Schließrad tragenden Bereichs der Figur 3,
- Fig. 5: eine Draufsicht auf die Schließradstruktur des Furchenöffnerzusammenbaus aus Figur 1,
- Fig. 6: eine vergrößerte Teilseitenansicht des Furchenöffnerzusammenbaus der Figur 1, in der das Säschar und das Materialzuführrohr innerhalb des Umfangs der Scheibe gezeigt werden,
- Fig. 7: eine Seitenansicht des Materialzuführrohrs, das mit dem Furchenöffnerzusammenbau aus Figur 1 benutzt wird,
- Fig. 8: eine Vorderansicht des Materialzuführrohrs der Figur 7,
- Fig. 9: eine Draufsicht auf das Materialzuführrohr der Figur 7,
- Fig. 10: eine Ansicht des Materialzuführrohrs der Figur 7 von unten,
- Fig. 11: eine perspektivische Ansicht eines bekannten, rechtshändigen Furchenöffners, in der ein Gratbildungs- und Saatplatzierüngsproblem illustriert wird, wie es für einen derartigen Furchenöffner typisch ist,
- Fig. 12: eine Ansicht des Querschnitts einer mit dem bekannten Furchenöffner aus Figur 11 hergestellten Furche, wobei ein vom Furchenöffner hergestellter, die Saatgutablage störender Grat in der Furche und die Beeinflussung des Bodens an der Seite der Scheibe gegenüber der Seite des Tiefeneinstellrads dargestellt ist,
- Fig. 13: eine Ansicht, die einen Abschnitt des Säschars und einer Scheibe gemäß der vorliegenden Erfindung (ein linkshändiger Furchenöffner) zeigt, worin das Säschar ein mit dem Profil der Furche zusammen passendes Profil hat, und das Fehlen einer Beeinträchtigung des Bodens an der der Seite der Tiefeneinstellräder gegenüber liegenden Seite dargestellt ist,
- Fig. 14: eine schematische Darstellung eines Geräts mit einer Vielzahl der Furchenöffnerzusammenbauten der Figur 1, die in engen Reihenabständen angeordnet sind, und
- Fig. 15: eine rückseitige perspektivische Ansicht des Furchenöffnerzusammenbaus, mit Blickrichtung auf die nachlaufende Seite der Scheibe, wobei Teile entfernt sind, um den Aufbau des Säschars und des Materialzuführrohrs besser darzustellen.

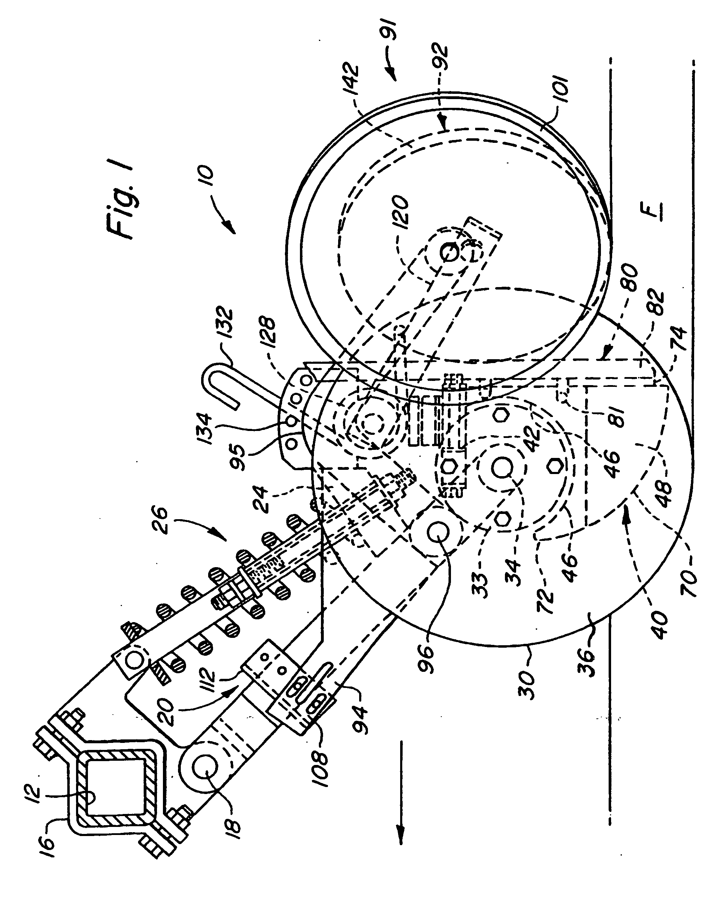

In Figur 1 ist ein Furchenöffnerzusammenbau 10 ge-zeigt, der mit einem sich quer erstreckenden Rahmenrohr oder Werkzeugträger 12 eines Geräts verbunden ist, wie einer Drillmaschine, um sich in Vorwärtsrichtung (Pfeil) über den Boden zu bewegen, um Material wie Saatgut und/oder Dünger in einer vom Furchenöffnerzusammenbau 10 geformten Furche F abzulegen. Eine Klammer 16 ist mit dem Werkzeugträger 12 verbunden und umfasst ein unteres Schwenklager 18, das das vordere, obere Ende einer Zugstange 20 trägt. Ein Federauflager 24 ist nahe dem unteren, hinteren Ende der Zugstange 20 angebracht, und ein Niederdruckfeder- und Spannungsverbindungszusammenbau 26 spannt das hintere Ende nach unten vor und begrenzt eine Bewegung der Zugstange 20 um das Schwenklager 18 nach unten, wenn der Werkzeugträger 12 von der in Figur 1 gezeigten Feldarbeitsposition in eine Transportposition verschwenkt wird.

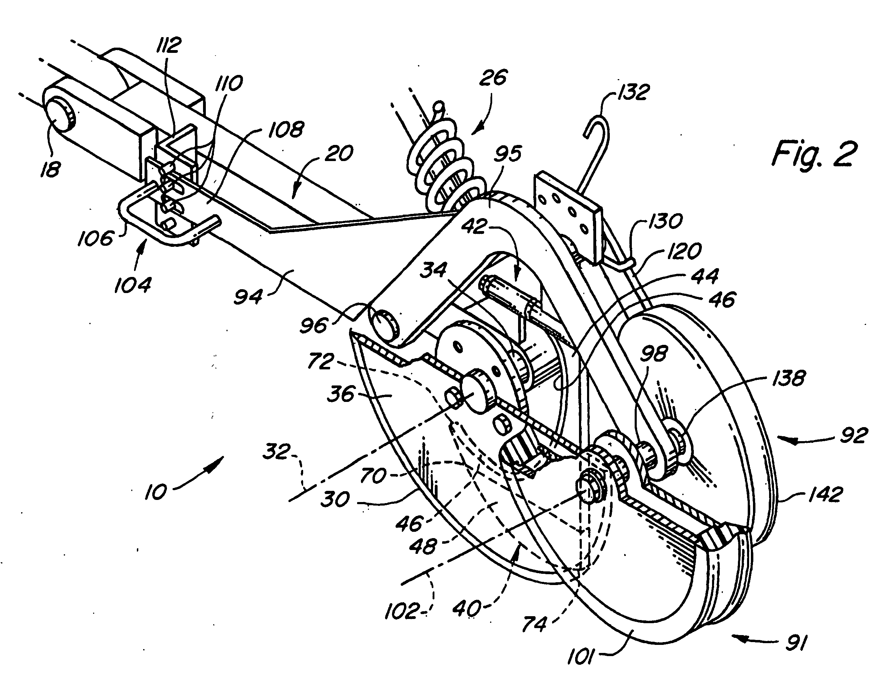

Eine Scheibe 30 ist um eine Achse 32 drehbar an einer Scheibennabe 33 und einem Lagerzusammenbau 34, der am unteren hinteren Ende der Zugstange 12 angeordnet ist, gelagert. Die Achse 32 ist leicht aus einer quer zur Vorwärtsrichtung verlaufenden Richtung abgewinkelt, vorzugsweise in der Größenordnung um 5 Grad, so dass die Scheibe 30 leicht aus der Vorwärtsrichtung abgelenkt ist, um eine vorlaufende Seite 36 (Figur 2) und eine nachlaufende Seite 37 zu definieren. Dadurch wird eine mit 38 gekennzeichnete schützende Schattenfläche durch die Scheibe 30 in der Nähe der nachlaufenden Seite 37 bereitgestellt.

Ein als Einrichtung zum Einbringen von Material in die Furche vorgesehener Säscharzusammenbau 40 ist durch ein oberhalb des Lagerzusammenbaus 34 angeordnetes Schwenklager 42 schwenkbar mit dem unteren hinteren Ende der Zugstange 20 verbunden und erstreckt sich im wesentlichen in der Längsrichtung (von vorn nach hinten). Ein oberer Abschnitt 44 des Säscharzusammenbaus 40 hängt vom Schwenklager 42 in der Nähe der Nabe 33 herab und umfasst eine bogenförmige Einbuchtungsfläche 46, die im wesentlichen mit der Nabe 33 übereinstimmt und letztere teilweise umschließt. Ein unterer Abschnitt 48 des Säscharzusammenbaus 40 ist mit dem oberen Abschnitt 44 verbunden. Die Einbuchtungsfläche 46 umrundet die Nabe 33 im wesentlichen um mehr als 180 Grad und bildet eine glatte, Verunreinigungen abschirmende Oberfläche um die Achse 32 der Scheibe 30, um einem Verkeilen von Material zwischen der Scheibe 30 und dem Säscharzusammenbau 40 vorzubeugen.

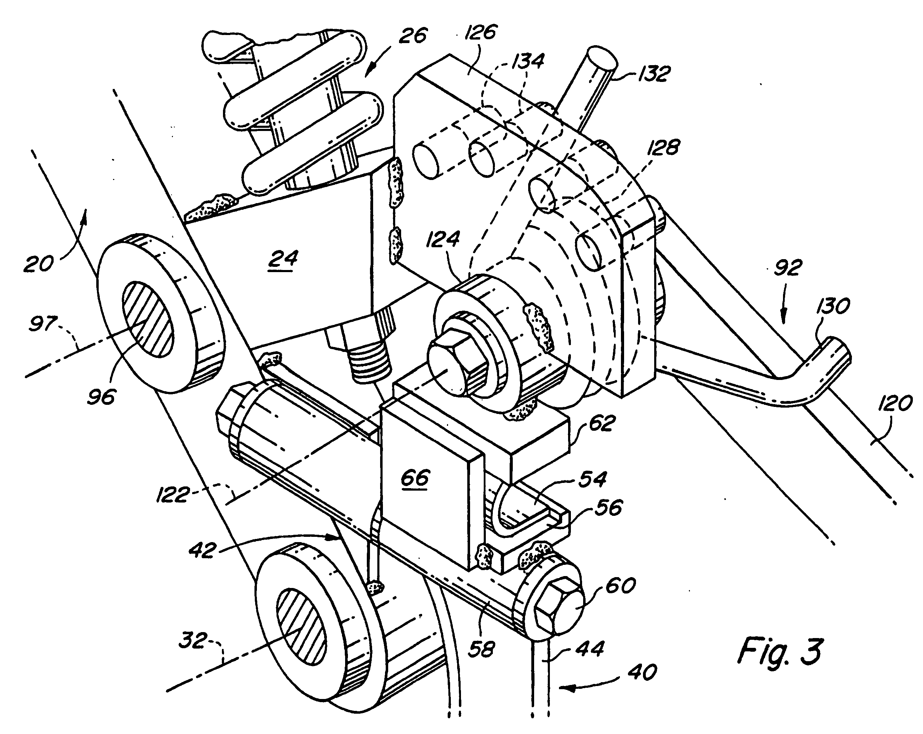

Eine U-förmige Feder 52 umfasst im wesentlichen horizontal angeordnete Seitenbeine 54, von denen eines an einem eingebuchteten, flächigen Oberflächenelement 56 (Figur 3) anliegt, das an einer Schwenkfläche 58 des oberen Abschnitts 44 des Säscharzusammenbaus 40 befestigt ist. Ein Schwenkstift 60 verbindet die Schwenkfläche 58 schwenkbar mit der Zugstange 20. Das andere Seitenbein 54 der Feder 52 liegt an einem zweiten, eingebuchteten flächigen Oberflächenelement 62 an, das gegenüber dem unteren hinteren Ende der Zugstange 20 fixiert ist. Die Feder 52 drückt-den Säscharzusammenbau 40 um die Achse des Schwenklagers 42 in die Uhrzeigerrichtung (wenn man Figur 3 betrachtet) in Richtung auf die nachlaufende Seite 37 der Scheibe 30. Ein am oberen Abschnitt 44 des Schars befestigtes Anschlagelement 66 schlägt am inneren Ende des Oberflächenelements 62 an, um ein Verschwenken in der Uhrzeigerrichtung zu begrenzen. Die Anordnung zur Erzeugung der Vorspannung ist schmal und im wesentlichen im Schatten der Zugstange 20 enthalten, um das Bereitstellen eines kompakten Profils zwecks verbesserten Flusses von Verunreinigungen und Schutzes der Komponenten zu unterstützen.

Der untere Abschnitt 48 des Säscharzusammenbaus 40 ist vorzugsweise als abnutzungsfestes Gusselement hergestellt, das eine Kante 70 aufweist, die von einer vorlaufenden Spitzenfläche 72, die vor und unterhalb der Achse 32 der Scheibe 30 liegt, nach unten und hinten gekrümmt bis zu einem unteren, hintersten Abschnitt 74 verläuft, der hinter der Achse 32 in der Nähe des Umfangs der Scheibe 30 (Figur 1, 2 und 6) angeordnet ist. In der Vorwärtsrichtung betrachtet ist der gesamte Säscharzusammenbau 40 innerhalb der schützenden Schattenfläche 38 der Scheibe 30 angeordnet, und von der Seite betrachtet (Figuren 1, 2 und 15) ist der Säscharzusammenbau 40 ebenfalls innerhalb des Umkreises der Scheibe 30 angeordnet zwecks eines hohen Grades an Schutz. Der untere Abschnitt 48 des Säscharzusammenbaus 40 ist derart geformt, dass er mit der Wand der Furche zusammenpasst, egal welche Arbeitstiefe für den Säscharzusammenbau 40 ausgewählt wurde. Dass die Form des Säscharzusammenbaus 40 mit der Wand der Furche zusammenpasst reduziert oder vermeidet eine Beeinträchtigung des Bodens wesentlich, weil der Säscharzusammenbau 40 in der vom der vorlaufenden Kante der Scheibe 30 geschaffenen Furche läuft. Im Ergebnis kann ein wesentlich breiteres Saatgutzuführrohr geschützt hinter dem Säscharzusammenbau 40 befestigt werden, als bei Säscharen, die nicht mit der Wand der Furche zusammenpassen. Dadurch, dass das Säschar mit der Furche übereinstimmt, ist vermieden, dass loser Boden in die Furche fällt, bevor das Material darin eingebracht ist. Auch wenn sich die Maschine 14 in die Richtung dreht, die normalerweise eine schmalere Furche zur Folge hat, hält das Säschar die Furche offen, so dass das Material weiterhin im untersten Abschnitt der Furche abgelegt werden kann.

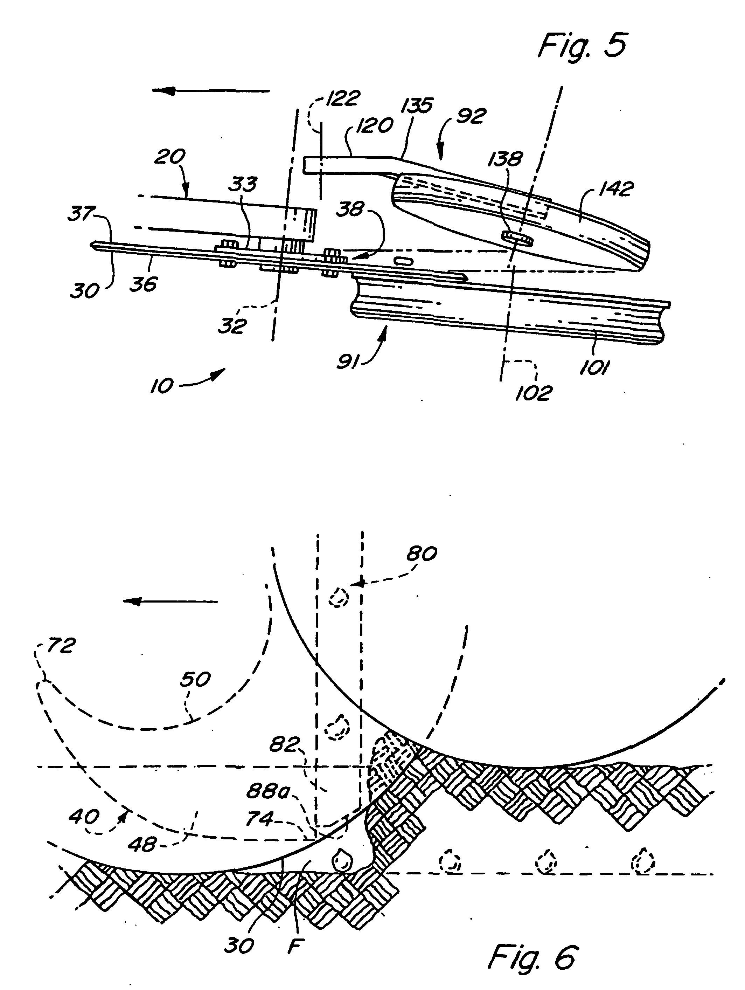

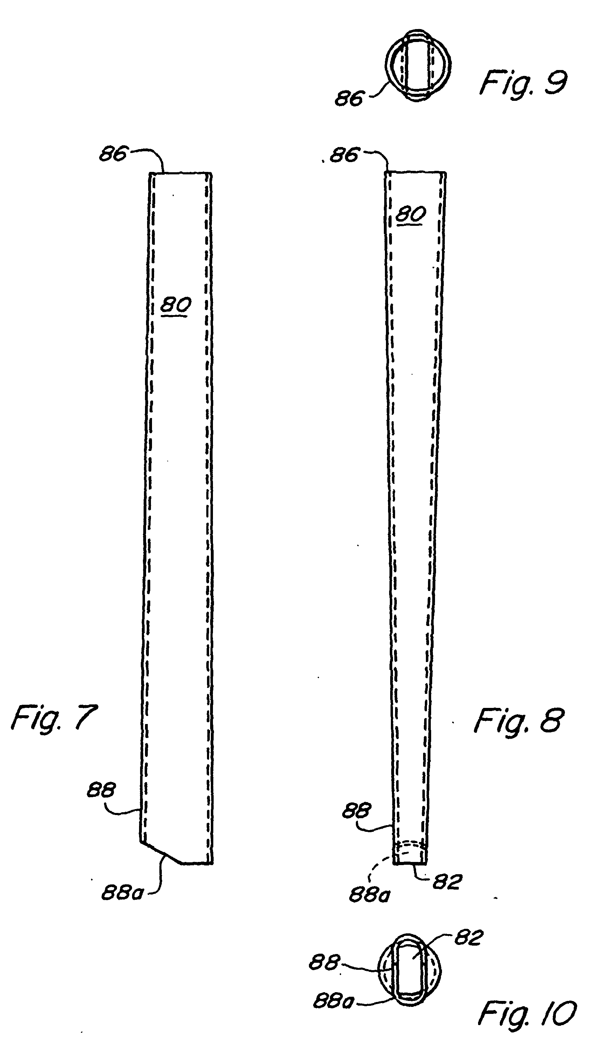

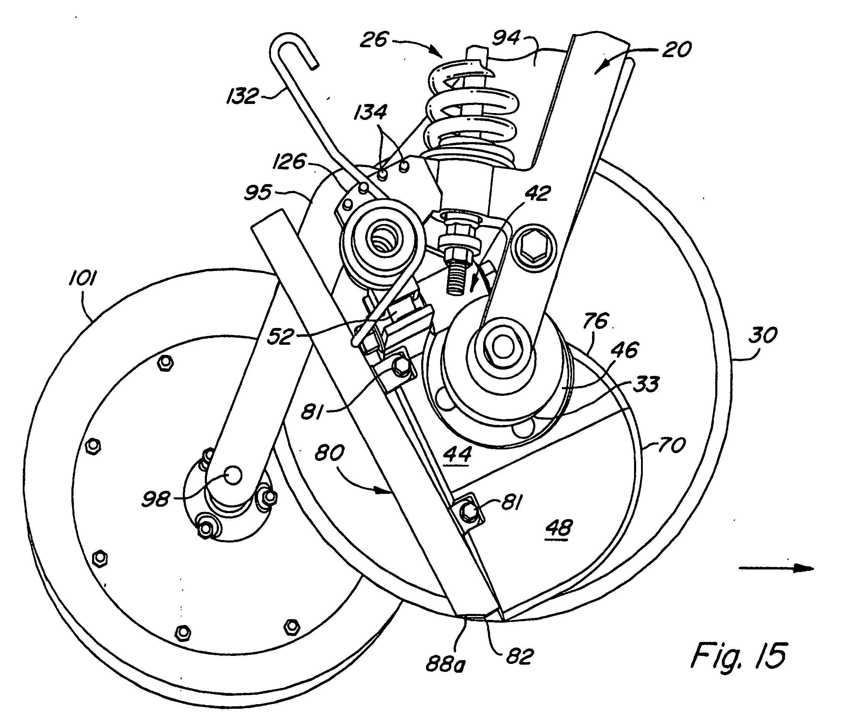

Ein Saatgut- oder Materialzufuhrrohr 80 ist durch Schrauben 81 (Figur 15) mit der Rückseite des Säscharzusammenbaus 40 verbunden und hat ein Profil, das in Vorwärtsrichtung betrachtet, im wesentlichen innerhalb des Schattens 38 der Scheibe 30 liegt. Das Materialzufuhrrohr 80 hat eine tiefste Auslassfläche 82 direkt hinter dem unteren Abschnitt 48 des Säscharzusammenbaus 40 und im Schatten 38. Betrachtet man die Seitenansichten der Figuren 1 und 6, ist das Materialzufuhrrohr 80 auch innerhalb des Umfangs der Scheibe 30 zwecks Schutz vor Steinen und ähnlichem. Um eine Fähigkeit zu einem hohen Durchsatz von Material aufrechtzuerhalten, um einen Betrieb mit hoher Geschwindigkeit zu ermöglichen, während das enge, von der Scheibe 30 geschützte Profil aufrechterhalten wird, verjüngt sich das Materialzufuhrrohr 80 von einem oberen, runden Abschnitt 86 (Figuren 7 bis 10), das an dem (nicht gezeigten) Materialvorratsrohr angebracht und von ihm versorgt wird, zu einem unteren Teil 88 mit einem elliptischen Querschnitt, der schützender Weise hinter den unteren Abschnitt 48 des Säscharzusammenbaus 40 passt. Der hintere Abschnitt 88a des unteren Teils 88 ist in einem Winkel von etwa 30 Grad gegenüber der Horizontalen abgeschnitten, so dass sich der Auslass nach hinten öffnet und der untere Teil 88 innerhalb des Umkreises der Scheibe 30 bleibt. Der untere Teil 88 hat einen Querschnitt, der nur geringfügig kleiner ist als der des oberen, runden Abschnitts 86. Das Materialzufuhrrohr 80 ist gerade und vertikal in einem kleinen Winkel zur Scheibe 30 orientiert und hat eine sehr geringfügige Verjüngung über seine ganze Länge, um ein Hochspringen des Saatguts zu vermeiden und hohe Saat- oder Materialabgaberaten bei sehr hohen Geschwindigkeiten des Geräts zu ermöglichen. Bei einem Beispiel ist die Übergangslänge für eine Materialzufuhrrohrlänge von 356 mm (14 Zoll) etwa 305 mm (12 Zoll) und der obere, runde Abschnitt 86 hat einen Durchmesser von etwa 35 mm (1,4 Zoll), der sich zu einer Weite des unteren Teils 88 von etwa 18 mm (0,7 Zoll) verengt und sich in der von vorn nach hinten erstreckenden Richtung erweitert (Figur 9 und 10). Das Bereitstellen des langen Übergangs vermindert ein Hochspringen des Saatguts und erhält eine hohe Kapazität zur besseren Materialablage in den Furchen bei hoher Geschwindigkeit. Das Materialzufuhrrohr 80 kann auch zum Ausbringen dehydrierten Ammoniaks (oder eines anderen gasförmigen Materials) geeignet sein, im Schatten der Zugstange 20 und des Säscharzusammenbaus 40 liegen und einen Durchmesser von etwa 13 mm (0,5 Zoll) haben, um gasförmiges Material auf dem Boden der von der Scheibe 30 geformten Furche abzulegen, oder es kann flüssigen Dünger oder dergleichen bereitstellen.

Ein erster Radzusammenbau 91 ist einstellbar in der Nähe der vorlaufenden Seite 36 der Scheibe 30 abgestützt, und ein zweiter Radzusammenbau 92 ist einstellbar in der Nähe der nachlaufenden Seite 37 der Scheibe 30 abgestützt. Der erste Radzusammenbau 91 umfasst ein Armelement 94, das einen Mittelabschnitt 95 aufweist, der mittels eines Schwenklagers 96 vor der Achse 32 der Scheibe 30 um eine Achse 97 schwenkbar mit der Zugstange 20 verbunden ist. Das Armelement 94 erstreckt sich in rückwärtiger Richtung über die Nabe 33 und dann nach unten zu einer Verbindung mit einem Achsenelement 98, das ein erstes Rad 101 um eine erste Radachse 102 drehbar abstützt, die im wesentlichen parallel zur Achse 32 der Scheibe 30 verläuft und in der sich von vorn nach hinten erstreckenden Richtung nahe der hinteren Kante der Scheibe 30 angeordnet ist. Das erste Rad 101 ist drehbar gelagert, um sich an der ersten Seite 36 der Scheibe 30 zu drehen, um die Scheibe 30 zu reinigen, Tiefensteuerung bereitzustellen, und eine Schließfunktion für die eine Seite der Furche F bereitzustellen. Das Rad 101 verhindert außerdem, dass Bodenteile an der Rückseite der Scheibe 30 in der Nähe der Fläche, wo die Scheibe 30 den Boden verlässt, nach oben herauskommen.

Der erste Radzusammenbau 91 umfasst eine Tiefeneinstellstruktur 104, die zwecks komfortablem Zugang durch den Bediener nahe der Vorderseite des Furchenöffnerzusammenbaus 10 angeordnet ist. Die Tiefeneinstellstruktur 104 umfasst einen Handgriff 106, der mit einem geöffneten, vorderen Abschnitt 108 des Armelements 94 verbunden ist. Eine Reihe von Stiften 110 stehen von einer Klammer 112, die am vorderen Abschnitt der Zugstange 20 befestigt ist, über. Der vordere Abschnitt 108 des Armelements 94 ist vorzugsweise aus einem elastischen Metallblechmaterial hergestellt, so dass der Bediener den Handgriff 106 erfassen und den Abschnitt 108 von den Stiften 110 nach außen ziehen kann, um das Armelement 94 in die gewünschte vertikale Position des Rades 101 relativ zur Scheibe 30 zu verschwenken. Sobald das Rad 101 zur Erzielung der gewünschten Scheibenarbeitstiefe eingestellt ist, gibt der Bediener den Handgriff 106 frei, der nach hinten auf die Zugstange 20 zu zurückfedert, so dass die Öffnungen des Abschnitts 108 von den Stiften 110 gefangen werden, um den ersten Radzusammenbau 91 in der gewünschten Position zu haltern.

Der zweite Radzusammenbau 92 umfasst einen Radträgerarm 120, der ein vorderes Ende aufweist, das schwenkbar am hinteren Ende der Zugstange 20 befestigt ist, so dass es um eine oberhalb der Achse 32 der Scheibe 30 liegende Achse 122 schwenkbar ist. Ein Lagerzapfen 124 ist an einem Träger 126 befestigt, der wiederum mit dem Federauflager 24 verbunden ist. Eine nach unten drückende Feder 128 umfasst Windungen, die den Lagerzapfen 124 umlaufen, und ein versetztes Bein 130, das sich an der oberen Kante des Radträgerarms 120 nach unten abstützt. Ein Handgriff 132 zum Einstellen ist zwischen unterschiedlichen Paaren von Stiften 134 bewegbar, die vom Träger 126 überstehen, um den nach unten gerichteten Druck des Radträgerarms 120 einzustellen. Der Radträgerarm 120 erstreckt sich nach hinten und unten zu einer abgeknickten Stelle 135 und dann zu einer Verbindung mit einem Achsenelement 138, das ein zweites oder schließendes Rad 142 um eine Radachse 143 drehbar haltert, welche in dieselbe allgemeine Richtung wie die erste Radachse 102 abgewinkelt ist. Die Radachse 143 ist leicht in die Außenrichtung nach unten abgewinkelt, um das Rad 142 zur besseren Furchenschließwirkung gegenüber einer vertikalen Orientierung zu neigen. Der Winkel der Radachse 143 gegenüber der Querrichtung ist ebenfalls größer als der der Radachse 102.

Die Schwenkachse 122 des Radträgerarms 120 des schließenden Rads 142 ist gegenüber der Horizontalen in einem Winkel angeordnet (etwa 5 Grad, wie in Figur 5 gezeigt), um den seitlichen Abstand gegenüber dem zur Tiefeneinstellung dienenden Rad 101 zu vergrößern, wenn das schließende Rad 142 über Haufen von Resten fährt. Das Rad 142 bewegt sich von der Scheibe 30 nach außen, wenn der Radträgerarm 120 nach oben schwenkt, um ein Entfernen von Unrat, der anderenfalls ein Blockieren bedingen würde, zu unterstützen. Die nahe Anordnung des Rads 142 an der Achse 32 an der nachlaufenden Seite 37 der Scheibe 30 vermindert die Gesamtlänge, ermöglicht ein besseres Folgen der Spur und vermindert das Gewicht des Radträgerarms 120 im Vergleich mit anderen Furchenöffnerzusammenbauten, bei denen das Schließrad der Scheibe nachläuft. Das Rad 142 ist in erster Linie durch die Feder 128 in einen Kontakt mit dem Boden vorgespannt, und nicht nur durch Gewicht, um eine schnellere Reaktion auf Bodenkonturen zu ermöglichen.

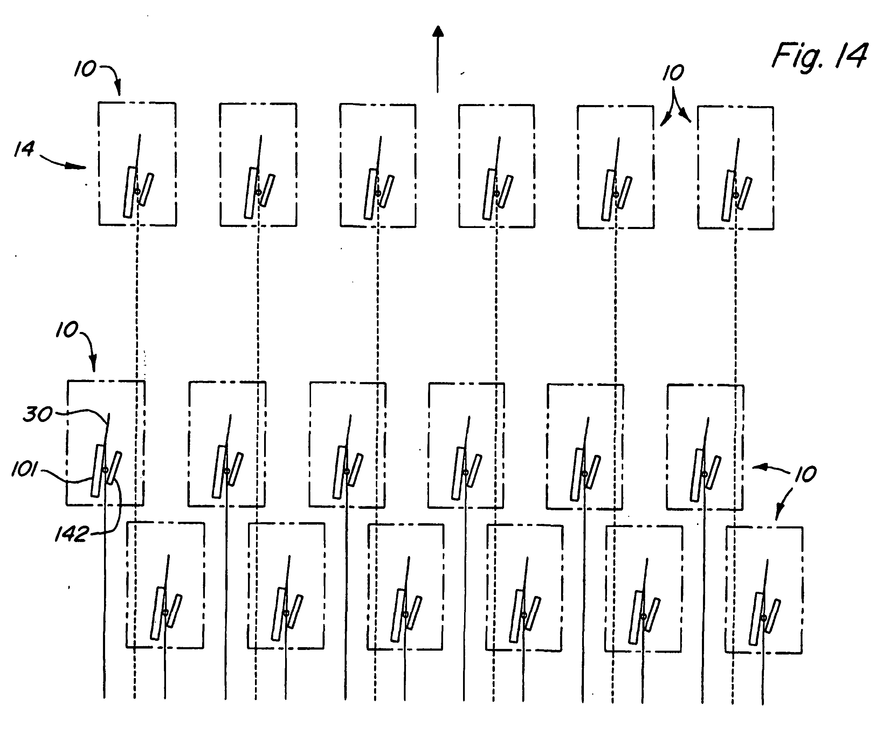

Die Räder 101 und 142 berühren den Boden, wie sie in Figur 1 dargestellt sind, an gegenüberliegenden Seiten der Furche kurz hinter dem Auslass 82 des Materialzufuhrrohrs 80 in unmittelbarer Nähe der Fläche, wo die Scheibe 30 den Boden verlässt. Die Kontaktflächen der Räder 101, 142 sind im wesentlichen Seite an Seite, um die gegenüberliegenden Seiten der Furche über dem abgelegten Material zusammenzuklappen, unmittelbar nachdem das Material den untersten Bereich der Furche erreicht, um Hochspringen zu vermeiden und eine gleichförmige Tiefe sicherzustellen. Die nahe beabstandeten Räder 101 und 142 stellen eine Bodenwelle bereit, die die Räder führt und die vorteilhafte Furchenschließwirkung unterstützt. Wenn das Materialzufuhrrohr 80 ein Rohr für dehydriertes Ammoniak ist, versiegelt die vorteilhafte Bodenbewegung, die von der oben beschriebenen Anordnung bereitgestellt wird, den Boden fast sofort und reduziert den Materialverlust aus dem Boden wesentlich. Die in Figur 14 gezeigte Anordnung von Furchenöffnerzusammenbauten 10 ist ein Beispiel einer vorteilhaften versetzt beabstandeten Anordnung, die die gleichartig abgewinkelten Räder 101, 142 und Scheiben 30 der Furchenöffnerzusammenbauten 10 verwendet, um zu verhindern, dass Unrat von einem Furchenöffnerzusammenbau 10 direkt auf einen benachbarten Furchenöffnerzusammenbau 10 trifft, aber enge Reihenabstände erlaubt.

## Patentansprüche

1. Furchenöffnerzusammenbau (10), mit einer Scheibe (30), die um eine Achse (32) drehbar und eingerichtet ist, eine Furche im Boden zu öffnen, einem ersten, sich im Eingriff mit dem Boden befindlichen Rad (101) und einem zweiten, sich im Eingriff mit dem Boden befindlichen Rad (142), die zusammenwirken, um die Furche zu schließen, wobei das erste Rad (101) und das zweite Rad (142) unterste Abschnitte aufweisen, die sich der nachlaufenden Kante der Scheibe (30) benachbart im Eingriff mit dem Boden befinden, das erste Rad (101) auf einer ersten Seite der Scheibe (30) und das zweite Rad (142) auf einer zweiten Seite der Scheibe (30) angeordnet ist und die in Vorwärtsrichtung am weitesten vorn angeordneten Teile des ersten Rads (101) in Vorwärtsrichtung hinter der Achse (32) der Scheibe (30) und in Vorwärtsrichtung vor der nachlaufenden Kante der Scheibe (30) angeordnet sind, **dadurch gekennzeichnet, dass** die in Vorwärtsrichtung am weitesten vorn angeordneten Teile des zweiten Rads (142) in Vorwärtsrichtung hinter der Achse (32) der Scheibe (30) und in Vorwärtsrichtung vor der nachlaufenden Kante der Scheibe (30) angeordnet sind, und dass das erste Rad (101) ein Tiefeneinstell- und Furchenschließrad ist und Boden um die nachlaufende Kante der Scheibe (30) drückt und Boden und Unrat von der Scheibe (30) abkratzt.

2. Furchenöffnerzusammenbau (10) nach Anspruch 1, **dadurch gekennzeichnet, dass** die Radachse (102) des ersten Rads (101) im wesentlichen parallel zur Achse (32) der Scheibe (20) verläuft, die in einem Winkel von 5 Grad oder weniger zu einer quer zur Vorwärtsrichtung verlaufenden Richtung verläuft.

3. Furchenöffnerzusammenbau (10) nach einem der Ansprüche 1 oder 2, **gekennzeichnet durch** eine Einrichtung zum Einbringen von Material in die Furche, die an einer Seite der Scheibe (30) angeordnet ist, wobei das erste Rad (101) und das zweite Rad (142) die von der Scheibe (30) erzeugte Furche in Vorwärtsrichtung unmittelbar hinter der Einrichtung schließen.

4. Furchenöffnerzusammenbau (10) nach Anspruch 3, **dadurch gekennzeichnet, dass** die Einrichtung zum Einbringen von Material in die Furche eine der Vorderseite der Räder (101, 142) benachbarte, in Vorwärtsrichtung hinterste Auslassfläche (82) hat, so dass die Räder (101, 142) den Boden über die Furche drücken, sobald das Material in einem unteren Bereich der Furche abgelegt ist.

5. Furchenöffnerzusammenbau (10) nach Anspruch 3 oder 4, **dadurch gekennzeichnet, dass** die Einrichtung zum Einbringen von Material in die Furche in einem Schwenklager (42) um eine im wesentlichen horizontale Achse schwenkbar ist, und dass eine vorzugsweise oberhalb der Achse angeordnete Feder (52) die Einrichtung gegen die Scheibe (30) drückt.

6. Furchenöffnerzusammenbau nach einem der Ansprüche 3 bis 5, **dadurch gekennzeichnet, dass** die Scheibe (30) eine Scheibennabe (33) aufweist, wobei die Einrichtung zum Einbringen von Material in die Furche die Scheibennabe (33) um mehr als 180 Grad umschließt.

7. Furchenöffnerzusammenbau (10) nach einem der Ansprüche 3 bis 6, **dadurch gekennzeichnet, dass** die mit dem Boden im Eingriff befindlichen Abschnitte der Räder (101, 142) in Vorwärtsrichtung im gleichen Abstand von der Einrichtung zum Einbringen von Material in die Furche angeordnet sind, so dass die Räder (101, 142) den Boden an gegenüberliegenden Seiten der Furche etwa gleichzeitig in die Furche drücken.

8. Furchenöffnerzusammenbau (10) nach einem der Ansprüche 3 bis 7, **dadurch gekennzeichnet, dass** die Einrichtung zum Einbringen von Material in die Furche durch ein Materialzufuhrrohr (80) mit Material versorgt wird, wobei das Materialzufuhrrohr im oberen Bereich (86) einen kreisförmigen Querschnitt aufweist in Richtung auf den Auslass zu in einen elliptischen Querschnitt (88) übergeht.

9. Furchenöffnerzusammenbau nach einem der Ansprüche 1 bis 8, **dadurch gekennzeichnet, dass** das zweite Rad (142) an einem Radträgerarm (120) befestigt ist, der an seinem vorderen Ende vorgespannt und um eine Achse (122) schwenkbar gelagert ist, dass am hinteren Ende des Radträgerarms (120) das zweite Rad (142) drehbar gelagert ist, und dass die Achse (122) gegenüber einer quer zur Vorwärtsrichtung verlaufenden Richtung abgewinkelt ist, so dass sich das zweite Rad (142) von der Scheibe (30) nach außen bewegt, wenn sich der Radträgerarm (120) entgegen der Vorspannung anhebt, um ein Entfernen von Unrat zwischen dem zweiten Rad (142) und der Scheibe (30) zu erleichtern.

## Claims

1. Furrow opener assembly (10), having a disc (30), which is fitted and rotatable about an axis (32), for opening a furrow in the soil, having a first wheel (101), which is situated in engagement with the soil, and a second wheel (142), which is situated in engagement with the soil, which cooperate in order to close the furrow, the first wheel (101) and the second wheel (142) having lowermost portions which are situated adjacent to the trailing edge of the disc (30) in engagement with the soil, the first wheel (101) being disposed on a first side of the disc (30) and the second wheel (142) being disposed on a second side of the disc (30) and the parts of the first wheel (101) which are disposed furthest forward in the forward direction being disposed in the forward direction behind the axis (32) of the disc (30) and in the forward direction in front of the trailing edge of the disc (30), **characterised in that** the parts of the second wheel (142) which are disposed furthest forward in the forward direction are disposed in the forward direction behind the axis (32) of the disc (30) and in the forward direction in front of the trailing edge of the disc (30), and **in that** the first wheel (101) is a depth adjustment and furrow closing wheel and presses soil around the trailing edge of the disc (30) and scrapes off soil and debris from the disc (30).

2. Furrow opener assembly (10) according to claim 1, **characterised in that** the wheel axis (102) of the first wheel (101) extends substantially parallel to the axis (32) of the disc (30), which extends at an angle of 5 degrees or less relative to a direction which extends transversely relative to the forward direction.

3. Furrow opener assembly (10) according to one of the claims 1 or 2, **characterised by** a device for introducing material into the furrow, which is disposed on one side of the disc (30), the first wheel (101) and the second wheel (142) closing the furrow produced by the disc (30) in the forward direction (30) directly behind the device.

4. Furrow opener assembly (10) according to claim 3, **characterised in that** the device for introducing material into the furrow has an outlet face (82), which is adjacent to the front side of the wheels (101, 142) and is rearmost in the forward direction, so that the wheels (101, 142) press the soil over the furrow as soon as the material is deposited in a lower region of the furrow.

5. Furrow opener assembly (10) according to claim 3 or 4, **characterised in that** the device for introducing material into the furrow can be pivoted in a pivot bearing (42) about a substantially horizontal axis, and **in that** a spring (52), which is preferably disposed above the axis, presses the device against the disc (30).

6. Furrow opener assembly according to one of the claims 3 to 5, **characterised in that** the disc (30) has a disc hub (33), the device for introducing material into the furrow enclosing the disc hub (33) by more than 180 degrees.

7. Furrow opener assembly (10) according to one of the claims 3 to 6, **characterised in that** the portions of the wheels (101, 142) which are situated in engagement with the soil are disposed in the forward direction at the same spacing from the device for introducing material into the furrow, so that the wheels (101, 142) press the soil on oppositely-situated sides of the furrow approximately at the same time into the furrow.

8. Furrow opener assembly (10) according to one of the claims 3 to 7, **characterised in that** the device for introducing material into the furrow is supplied with material by a material supply pipe (80), the material supply pipe having a circular cross-section in the upper region (86) changing in the direction towards the outlet into an elliptical cross-section (88).

9. Furrow opener assembly according to one of the claims 1 to 8, **characterised in that** the second wheel (142) is fixed on a wheel carrier arm (120), which is prestressed on its front end and mounted pivotably about an axis (122), **in that** the second wheel (142) is mounted rotatably on the rear end of the wheel carrier arm (120), and **in that** the axis (122) is angled relative to a direction which extends transversely relative to the forward direction, so that the second wheel (142) of the disc (30) moves outwards when the wheel carrier arm (120) lifts in opposition to the prestressing, in order to facilitate removal of debris between the second wheel (142) and the disc (30).

## Revendications

1. Dispositif d'ouverture de sillons (10), comportant un disque (30) qui est monté et peut tourner autour d'un axe (32) pour ouvrir un sillon dans le sol, une première roue (101) en prise avec le sol et une seconde roue (142) en prise avec le sol qui concourent afin de refermer le sillon, la première roue (101) et la seconde roue (142) comportant des parties inférieures qui sont en prise avec le sol de manière adjacente à l'arête suivante du disque (30), la première roue (101) étant disposée sur un premier côté du disque (30) et la seconde roue (142) sur un second côté du disque (30) et les parties de la première roue (101), disposées le plus loin en avant dans le sens de l'avancement, étant disposées dans le sens de l'avancement derrière l'axe (32) du disque (30) et dans le sens de l'avancement devant l'arête suivante du disque (30), **caractérisé en ce que** les parties de la seconde roue (142), disposées le plus loin en avant dans le sens de l'avancement, sont disposées dans le sens de l'avancement derrière l'axe (32) du disque (30) et dans le sens de l'avancement devant l'arête suivante du disque (30) et **en ce que** la première roue (101) est une roue de réglage de la profondeur et de fermeture de sillons et presse le sol autour de l'arête suivante du disque (30) et racle la terre et les salissures du disque (30).

2. Dispositif d'ouverture de sillons (10) selon la revendication 1, **caractérisé en ce que** l'essieu (102) de la première roue (101) s'étend de manière essentiellement parallèle à l'axe (32) du disque (20) qui s'étend à un angle de 5 degrés ou moins par rapport à un sens s'étendant transversalement au sens de l'avancement.

3. Dispositif d'ouverture de sillons (10) selon l'une quelconque des revendications 1 ou 2, **caractérisé par** un dispositif de dépôt de matière dans le sillon qui est disposé sur un côté du disque (30), la première roue (101) et la seconde roue (142) fermant le sillon produit par le disque (30), dans le sens de l'avancement, directement derrière le dispositif.

4. Dispositif d'ouverture de sillons (10) selon la revendication 3, **caractérisé en ce que** le dispositif de dépôt de matière dans le sillon comporte une surface de sortie (82) la plus en arrière dans le sens de l'avancement, adjacente au côté avant des roues (101, 142) de telle sorte que les roues (101, 142) pressent le sol au-dessus du sillon dès que la matière est déposée dans une zone inférieure du sillon.

5. Dispositif d'ouverture de sillons (10) selon la revendication 3 ou 4, **caractérisé en ce que** le dispositif de dépôt de matière dans le sillon peut être basculé dans un support pivotant (42) autour d'un axe essentiellement horizontal et **en ce qu'**un ressort (52), disposé de préférence au-dessus de l'axe, presse le dispositif contre le disque (30).

6. Dispositif d'ouverture de sillons selon l'une quelconque des revendications 3 à 5, **caractérisé en ce que** le disque (30) comprend un moyeu de disque (33), le dispositif de dépôt de matière dans le sillon entourant le moyeu de disque (33) de plus de 180°.

7. Dispositif d'ouverture de sillons (10) selon l'une quelconque des revendications 3 à 6, **caractérisé en ce que** les parties des roues (101, 142) en prise avec le sol sont disposées, dans le sens de l'avancement, à une même distance du dispositif de dépôt de matière dans le sillon de telle sorte que les roues (101, 142) pressent le sol sur les côtés opposés du sillon à peu près en même temps dans le sillon.

8. Dispositif d'ouverture de sillons (10) selon l'une quelconque des revendications 3 à 7, **caractérisé en ce que** le dispositif de dépôt de matière dans le sillon est alimenté en matière par un tube d'alimentation en matière (80), le tube d'alimentation en matière comportant une section circulaire dans la zone supérieure (86) et se transforme, en direction de la sortie, en une section elliptique (88).

9. Dispositif d'ouverture de sillons selon l'une quelconque des revendications 1 à 8, **caractérisé en ce que** la seconde roue (142) est fixée à un montant de support de roue (120) qui est précontraint à son extrémité avant et est logé de manière pivotante autour d'un axe (122), **en ce que** la seconde roue (142) est logée de manière rotative sur l'extrémité arrière du montant de support de roue (120) et **en ce que** l'axe (122) est incliné par rapport à un sens s'étendant transversalement au sens de l'avancement de telle sorte que la seconde roue (142) se déplace vers l'extérieur à partir du disque (30) lorsque le montant de support de roue (120) se soulève dans le sens inverse de la précontrainte afin de faciliter un retrait des salissures entre la seconde roue (142) et le disque (30).
